# EUROPÄISCHE PATENTSCHRIFT

(11) **EP 1 929 431 B1**
(45) Veröffentlichungstag und Bekanntmachung des Hinweises auf die Patenterteilung: **15.04.2009**
(21) Anmeldenummer: 06792353.2
(22) Anmeldetag: 28.09.2006
(51) Int. Cl.: G06K 9/00

(54) **VERFAHREN UND VORRICHTUNG ZUM ERFASSEN BIOMETRISCHER MERKMALE**
METHOD AND APPARATUS FOR DETECTING BIOMETRIC FEATURES
PROCEDE ET DISPOSITIF POUR DETERMINER DES CARACTERISTIQUES BIOMETRIQUES

(30) Priorität: 28.09.2005 DE 102005047754
(43) Veröffentlichungstag der Anmeldung: 11.06.2008
(73) Patentinhaber: Fraunhofer-Gesellschaft zur Förderung der angewandten Forschung e.V., 80686 München (DE); Universität Siegen, 57068 Siegen (DE)
(72) Erfinder: DRAHANSKY, Martin, 61600 Brno (CZ); NÖTZEL, Ralf, 57250 Netphen-Eschenbach (DE); FUNK, Wolfgang, 63741 Aschaffenburg (DE)
(74) Vertreter: Patentanwälte Bressel und Partner
(86) Internationale Anmeldenummer: PCT/EP2006/009533
(87) Internationale Veröffentlichungsnummer: WO 2007/036370

(56) Entgegenhaltungen:
- WO-A-20/04097719
- US-A1- 2005 053 264

## Beschreibung

Die Erfindung betrifft ein Verfahren und eine Vorrichtung zum Erfassen biometrischer Merkmale. Die Erfindung betrifft insbesondere die Verifikation, ob es sich bei dem Objekt der biometrischen Erfassung um einen Teil einer lebenden Person handelt.

Es ist bekannt, ein Fingerabdruck-Muster, das eine Person eindeutig identifiziert, mit technischen Mittel zu erfassen. Z.B. ist aus der Zusammenfassung der JP 2001184490 eine derartige Vorrichtung bekannt. Zur Fingerabdruck-Detektion wird ein Finger an der äußeren peripheren Oberfläche eines Leserollers angelegt und daran abgerollt. Der Teil des Fingerabdrucks, der den Leseroller kontaktiert, wird durch ein optisches System mit Hilfe von künstlich erzeugtem Licht erfasst. Ein Pulssensor detektiert einen Puls nahe bei dem Fingerabdruck und verifiziert, ob er biologisch ist oder nicht.

US 2005/0053264 A1 beschreibt einen Fingerabdrucksensor, welcher die Lebenderkennung eines Benutzers anhand seines Pulses über den zeitlich variierenden Blutfluss bestimmt. Aus WO 2004/097719 A1 ist ein Fingerabdrucksensor bekannt, der eine Lebenderkennung anhand von durch den Pulsschlag hervorgerufenen, mechanischen Druckänderungen des Fingerabarflüche vornimmt.

Aus dem Buch "Guide to Biometrics" von Ruud M. Bolle et al., Kapitel 3, Seiten 31-36, Springer-Verlag, ISBN 0-387-40089-3, 2004, ist bekannt, dass die innenseitigen Oberflächen von Händen, kleine Erhebungen der Haut mit dazwischen liegenden Furchen aufweisen. Es werden Einrichtungen zum Erfassen der Fingerabdrücke beschrieben, die ohne Farbe auskommen, wobei weitere Quellen genannt werden, in denen die entsprechenden Verfahren noch detaillierter beschrieben sind. Insbesondere werden in dem Buch optische Verfahren beschrieben, bei denen eine Kamera reflektierte Signale von der Unterseite eines Prismas aufnimmt, während der Finger die Oberseite des Prismas berührt. Ferner wird ein elektrostatisches Verfahren unter der Bezeichnung "CMOS Capacitance" beschrieben. Sowohl die optischen Verfahren als auch das elektrostatische Verfahren liefern digitale Bilder des Fingerabdrucks. Ferner wird ein thermisches Verfahren beschrieben, das Temperaturunterschiede misst, die durch die Erhebungen-Furchen-Struktur erzeugt wird, während der Finger über einen Scanner bewegt wird. Daraus wird wiederum ein Bild erzeugt. Außerdem wird ein Verfahren beschrieben, bei dem ein UltraschallStrahl über die Finger-Oberfläche gescannt wird, um direkt die Tiefe der Furchen aus dem reflektierten Signale zu messen. Auf diese Weise lässt sich ein berührungsloser Sensor implementieren.

In dem Buch "Automatic Fingerprint Recognition Systems", editiert von Nalini Ratha et al., Kapitel 7, Seiten 127-128, Springer-Verlag, ISBN 0-387-95593-3, 2003, wird beschrieben, dass Erhebungen (ridges) der Haut, die durch die dazwischen liegenden Furchen definiert sind, für eine bestimmte Person charakteristische Anomalien aufweisen. Diese Anomalien werden Minutien (lateinisch: minutiae) genannt. Unter Minutien werden insbesondere Änderungen der Erhebungen und Bifurkationen der Erhebungen verstanden. Anhand der Minutien lassen sich Fingerabdrücke klassifizieren.

Es ist eine Aufgabe der vorliegenden Erfindung, ein Verfahren und eine Vorrichtung der eingangs genannten Art anzugeben, die eine zuverlässige und kostengünstige Erkennung biometrischer Merkmale, nämlich des Fingerabdruck-Musters einer lebenden Person, ermöglichen.

Gemäß einem grundlegenden Gedanken der vorliegenden Erfindung werden kleinste Bewegungen der Haut, die durch das Pulsieren von Blut verursacht werden, ausgewertet. Der dem Pulsieren zugrundeliegende Herzschlag ist ein charakteristisches Merkmal für jede lebende Person. Der Erfindung liegt die Erkenntnis zugrunde, dass durch das Pumpen von Blut durch die Adern eine zyklische Vergrößerung und Verkleinerung des Volumens unter der Haut stattfindet, die durch Beobachtung der Hautoberfläche detektiert werden kann.

Insbesondere die Haut an der Fingerkuppe, die bekanntermaßen für jede Person individuell geformte und verlaufende gewölbte Strukturen (Papillarlinien, bzw. Erhebungen und Furchen) aufweist, eignet sich sowohl für die Identifizierung der Person als auch für die Erkennung des Herzschlages. Aufgrund des Herzschlages findet nicht nur eine zyklische Vergrößerung und Verkleinerung von Dimensionen des Fingerabdruck-Musters statt. Vielmehr kann auch eine zyklische Bewegung einzelner Oberflächenmerkmale des Fingerabdruck-Musters festgestellt werden, die durch den Herzschlag verursacht wird. Da die Amplitude der Größenänderung bzw. der Bewegung sehr gering ist (sie liegt typischerweise im Mikrometerbereich), ist diese Möglichkeit bisher nicht erkannt worden. Andererseits stellt es aber die zuverlässigste Möglichkeit der Verifikation der Herkunft eines biometrischen Merkmals von einer lebenden Person dar, dasselbe biometrische Merkmal (oder zumindest einen Teil davon) auch für die Lebenderkennung zu nutzen. Bei anderen Verfahren, wie z.B. dem eingangs erwähnten, kann die Lebenderkennung leichter getäuscht werden.

Insbesondere können die Bewegungen des Teils des Fingerabdruck-Musters oder des gesamten Fingerabdruck-Musters mit Hilfe eines optischen Systems erfasst werden. Dies hat den Vorteil, dass keinerlei invasive Eingriffe oder Farbe erforderlich sind und auch (wenn auch nicht zwingend notwendig) sichtbares Licht zur Bilderkennung verwendet werden kann. Es besteht somit keine Notwendigkeit für die Erzeugung oder Detektion spezieller Strahlung oder Wellen, wie z.B. Ultraschall oder Infrarotstrahlung. Die Methode der Bewegungserfassung ist jedoch nicht auf sichtbares Licht beschränkt. Insbesondere kann auch das Verfahren zur Aufnahme der eigentlichen biometrischen Merkmale, insbesondere des Fingerabdruck-Musters des Fingers, ein beliebiges Verfahren sein, wie es beispielsweise bereits aus dem Stand der Technik bekannt ist. Es ist jedoch auch möglich, dasselbe Verfahren, das zur Aufnahme des Fingerabdruck-Musters verwendet wird, auch zur Detektion der Bewegung und/oder Größenänderung des Fingerabdruck-Musters oder des Teils des Fingerabdruck-Musters anzuwenden.

Der Teil des Fingerabdruck-Musters kann z. B. nur aus einer Linie oder einem markanten Punkt (z. B. eine Bifurkation) bestehen. Es eignet sich jedoch auch jede andere Stelle des Fingers, die eine zyklische Bewegung ausführt. Die Bewegung und damit auch die zyklische Größenänderung kann unter Anwendung des Laser-Triangulationsprinzip ermittelt werden. Beispielsweise wird der Abstand zwischen einem Laser-Abstandssensor und dem Teil des Fingerabdruck-Musters im Laufe der Zeit wiederholt gemessen. Ein geeigneter Laser-Abstandsensor kann unter der Produktbezeichnung ANR1250 von der Panasonic Electric Works Europe AG, Holzkirchen, Deutschland bezogen werden.

Insbesondere wird ein Verfahren zum Erfassen biometrischer Merkmale vorgeschlagen, wobei zumindest ein Teil eines Fingerabdruck-Musters eines Fingers aufgenommen wird und eine zyklische Größenänderung zumindest eines Teils des Fingerabdruck-Musters detektiert wird. Dabei kann die Größenänderung durch Detektion und Auswertung einer Bewegung detektiert werden. Vorzugsweise wird durch Auswertung der zyklischen Größenänderung ermittelt, ob der Finger Teil einer lebenden Person ist.

Die zyklische Größenänderung wird durch Auswertung von Bildern des Teils des Fingerabdruck-Musters detektiert, wobei die Bilder zu verschiedenen Zeitpunkten aufgenommen wurden bzw. werden. Unter Bildern werden zwei- oder dreidimensionale Bilder verstanden, die auf beliebige Weise (z.B. durch Scannen oder durch eine zweidimensionale Bildaufnahme) gewonnen werden können. Bei den Bildern kann es sich auch um rekonstruierte Bilder handeln, die durch nicht unmittelbar bildgebende Bilderzeugungsverfahren gewonnen wurden. Ein Beispiel hierfür ist die an sich bekannte kapazitive (elektrostatische) Ermittlung von Fingerabdruck-Mustern.

Bei einer bevorzugten Ausführungsform des Verfahrens wird aus den Bildern, die zu verschiedenen Zeitpunkten aufgenommen wurden, eine Frequenz und/oder eine Amplitude einer Bewegung zumindest eines Bildelements des Fingerabdruck-Musters ermittelt. Alternativ kann auch eine der Frequenz und/oder der Amplitude eine äquivalente Größe ermittelt werden, z.B. die Periodendauer der Bewegung oder eine auf einen Bezugswert normierte Amplitude. Mit der Frequenz und/oder der Amplitude kann die auf den Pulsschlag zurückzuführende Bewegung zuverlässig charakterisiert werden. Vorzugsweise wird deshalb außerdem ein Vergleich der Frequenz, der Amplitude und/oder der äquivalenten Größe mit abgespeicherten Informationen durchgeführt. Diese abgespeicherten Informationen entsprechen der typischen Bewegung eines Fingerabdruck-Musters und/oder dem typischen zeitlichen Blutdruckverlauf einer lebenden Person. Daher kann aufgrund des Vergleichs zuverlässig entschieden werden, ob der Finger Teil einer lebenden Person ist. Bei der Durchführung des Vergleichs kann insbesondere eine Normierung der Frequenz und/oder der Amplitude auf die entsprechenden Vergleichswerte (oder umgekehrt) stattfinden, da sich die Frequenz und die Amplitude bei verschiedenen Personen deutlich unterscheiden können. Wesentlich für die Lebenderkennung ist nur, dass der typische zeitliche Verlauf der Bewegung verifiziert wird, der allen Personen eigen ist. Insbesondere weisen alle Pulskurven die an sich bekannten systolischen und diastolischen Phasen auf, mit ihren entsprechenden zeitlichen Anteilen an der Periodendauer eines einzelnen Zyklus.

Ferner wird eine Vorrichtung zum Erfassen biometrischer Merkmale vorgeschlagen, wobei die Vorrichtung eine Muster-Aufnahmeeinrichtung aufweist und eine Detektionseinrichtung aufweist. Die Muster-Aufnahmeeinrichtung ist ausgestaltet, zumindest einen Teil eines Fingerabdruck-Musters eines Fingers aufzunehmen. Die Detektionseinrichtung ist ausgestaltet, eine zyklische Größenordnung zumindest eines Teils des Fingerabdruck-Musters zu detektieren. Bezüglich der Vorteile einer solchen Vorrichtung wird auf die vorangegangene und weitere Beschreibung der Vorrichtung und des Verfahrens Bezug genommen.

Bei einer bevorzugten Ausgestaltung der Vorrichtung weist diese ferner einen Anlagekörper mit einer Anlage-Oberfläche zum Anlegen des Fingers auf. Dabei weist der Anlagekörper im Bereich der Anlage-Oberfläche eine Aussparung (z.B. eine Ausnehmung oder ein durch den Anlagekörper in einer quer zur Anlage-Oberfläche durchgehendes Durchgangsloch) auf. Die Aussparung ermöglicht eine Bewegung eines Teils des Fingers im Bereich des Fingerabdruck-Musters, wenn der Finger an der Anlage-Oberfläche anliegt. Dabei ist die Detektionseinrichtung ausgestaltet, die zyklische Größenänderung des im Bereich der Aussparung angeordneten Teils des Fingers zu detektieren. Dabei kann, muss aber nicht der im Bereich der Aussparung angeordnete Teil des Fingerabdruck-Musters auch für die eigentliche Fingerabdruck-Erkennung verwendet werden.

Dieser Ausgestaltung liegt der Gedanke zugrunde, dass einerseits eine Erfassung des biometrischen Merkmals, nämlich des Fingerabdruck-Musters, besonders gut möglich ist, wenn der Finger an der Anlage-Oberfläche anliegt. Andererseits aber würde dies eine Bewegung des Fingerabdruck-Musters, die durch den Pulsschlag hervorgerufen wird, unter Umständen behindern oder unmöglich machen. Dies gilt insbesondere dann, wenn der Finger mit Druck an die Anlage-Oberfläche angelegt wird. Aufgrund der Aussparung kann jedoch eine Bewegung des im Bereich der Aussparung liegenden Bereichs stattfinden. Die Erfinder haben festgestellt, dass ein solcher Teilbereich, der sich bewegen kann, ausreicht, um die Lebenderkennung durchzuführen.

In vorteilhafter Ausgestaltung weist die Aussparung eine Breite von mindestens 2 mm, vorzugsweise mindestens 3 mm, und besonders bevorzugt mindestens 5 mm auf. Hat die Aussparung z.B. einen kreisförmigen Querschnitt, ist mit der Breite der der Durchmesser der Aussparung gemeint. Es kommen jedoch auch andere Geometrien für die Aussparung in Frage.

Die Muster-Aufnahmeeinrichtung ist insbesondere so ausgestaltet, dass das Fingerabdruck-Muster aufgenommen werden kann, wenn der Finger an der Anlage-Oberfläche anliegt.

Ausführungsbeispiele der Erfindung werden nun unter Bezugnahme auf die beigefügte Zeichnung beschrieben. Die einzelnen Figuren der Zeichnung zeigen:
- Fig. 1: eine besonders bevorzugte Ausführungsform für eine erfindungsgemäße Anordnung zum Erfassen biometrischer Merkmale,
- Fig. 2: eine zweite Ausführungsform einer Anordnung zum Erfassen biometrischer Merkmale,
- Fig. 3: schematisch einen Teil eines Fingerabdruck-Musters zu zwei verschiedenen Zeitpunkten und
- Fig. 4: eine Pulskurve, die den zeitlichen Verlauf des Blutdrucks darstellt.

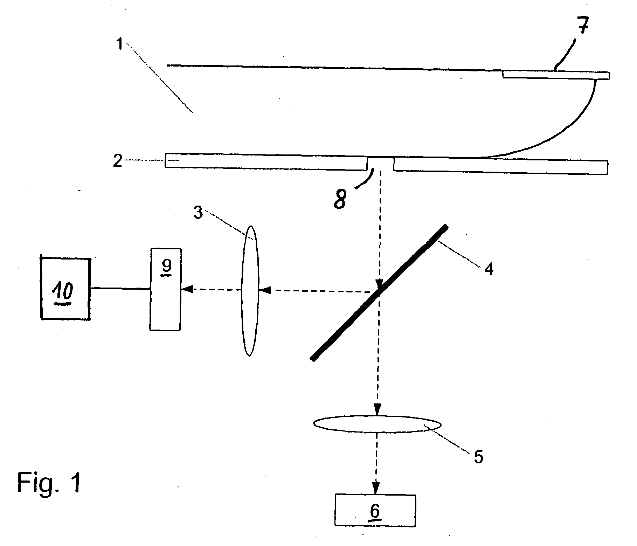

Fig. 1 zeigt einen Finger 1. Am rechten, freiliegenden Ende des Fingers 1 erkennt man den Fingernagel 7 an der Oberseite. Mit seiner Unterseite liegt der Finger 1 auf einer für die verwendete Messstrahlung durchsichtigen Platte oder Scheibe 2 auf. Die Platte 2 weist jedoch eine Durchgangsöffnung 8 auf, die beispielsweise einen (in der Ebene senkrecht zur Zeichnungsebene der Fig. 1 betrachtet) kreisförmigen Querschnitt aufweist. Der Durchmesser der Öffnung (oder bei anderer Formgebung der Öffnung die Breite) beträgt im Ausführungsbeispiel 6 mm.

Die Unterseite des Fingers 1 kann durch nicht näher dargestellte Einrichtungen, beispielsweise eine Lampe, beleuchtet werden. Im Ausführungsbeispiel wird sichtbares Licht für die Erkennung des Fingerabdruck-Musters des Fingers 1 verwendet. Das an der Unterseite des Fingers 1 reflektierte Licht trifft auf einen halbdurchlässigen Spiegel 4. Dort wird ein Teil des auftreffenden Lichts reflektiert, und mit Hilfe einer Optik 3 und einer Aufnahmeeinrichtung 9 wird ein erstes Bild aufgenommen. Dieser Vorgang wird laufend wiederholt, so dass erste Bilder von verschiedenen Zeitpunkten zur Verfügung stehen.

Die ersten Bilder sind Bilder von dem Bereich des Fingers 1, der am oberen Ende der Öffnung 8 liegt. Die Optik 3 kann hierzu so ausgestaltet sein (beispielsweise eine oder mehrere entsprechende Linsen aufweisen), dass dieser Bereich des Fingers 1 vergrößert auf die Aufnahmeeinrichtung 9 abgebildet wird. Die Vergrößerung erleichtert die erfindungsgemäße Erkennung von zeitlichen Veränderungen in dem Bereich.

Mit Hilfe von an sich bekannten Erkennungsverfahren, beispielsweise Teilen des in dem oben zitierten Buch von Ruud M. Bolle auf Seite 32, erster Absatz genannten AFIS, können charakteristische Elemente des Fingerabdruck-Bereichs an der Öffnung 8 automatisch erkannt werden, beispielsweise Bifurkationen der linienförmigen Erhebungen und/oder Enden der linienförmigen Erhebungen des Fingerabdrucks. Beispielsweise können Teilbereiche des ersten Bildes durch an sich bekannte automatische Bilderkennungsverfahren ausgewertet werden, wobei z.B. zum Erkennen einer Bifurkation zeilenweise und/oder spaltenweise Bildpixel-Folgen des ersten Bildes ausgewertet werden. Wird z.B. im Verlauf mehrerer benachbarter Bildzeilen jeweils ein erstes und darauf folgend jeweils ein zweites Maximum des Grauwertes erkannt, wobei zusätzlich noch überprüft werden kann, ob die entsprechende Entfernung der beidem Maxima voneinander der typischen Entfernung von zwei benachbarten Fingerabdruck-Linien plausiblerweise entspricht, sind zwei solcher Linien erkannt worden. Führt der Verlauf der beiden Linien bei fortgesetzter Auswertung weiterer Bildzeilen aufeinander zu und wird in einer der folgend ausgewerteten Bildzeilen ein gemeinsamer Bifurkationspunkt identifiziert (und optional bei Auswertung noch weiterer Bildzeilen festgestellt, dass lediglich nur noch ein Maximum des Grauwerts vorhanden ist), ist eine Bifurkation identifiziert. Dabei kann das Bild vor der zeilenweisen Auswertung oder spaltenweisen Auswertung beispielsweise gedreht werden, so dass die allgemeine Richtung des Verlaufs der Linien des Fingerabdrucks z.B. etwa senkrecht zu den Zeilen oder senkrecht zu den Spalten verläuft.

In entsprechender Weise können Enden von Linien des Fingerabdrucks erkannt werden.

Bei der Aufnahmeeinrichtung 9 handelt es sich z.B. um einen CCD-Chip.

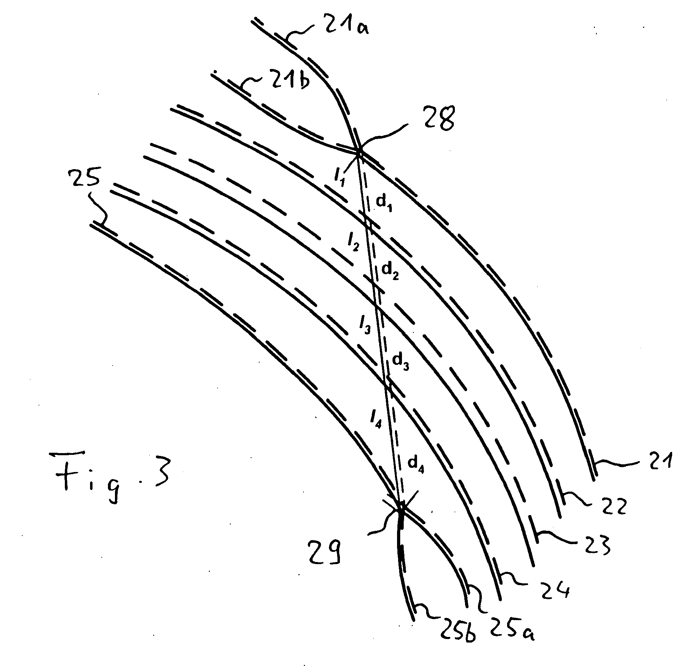

Die Aufnahmeeinrichtung 9 ist mit einer Auswertungseinrichtung 10 verbunden, die beispielsweise die zuvor beschriebene Identifikation von charakteristischen Merkmalen in den ersten Bildern durchführt. Beispielsweise wird in dem Bereich des Fingers 1, der auf der Öffnung 8 liegt, das in Fig. 3 dargestellte Fingerabdruck-Muster als erstes Bild erfasst. Dabei stellt Fig. 3 zwei erste Bilder zu verschiedenen Zeitpunkten dar, die mit der Anordnung gemäß Fig. 1 aufgenommen wurden. Zu einem ersten Zeitpunkt ergibt sich das erste Bild, das den dicken, ununterbrochenen Linien in Fig. 3 entspricht. Zu einem zweiten Zeitpunkt, der nach dem ersten Zeitpunkt liegt, ergibt sich das erste Bild, das den mit dicken Strichen gezeichneten ununterbrochenen Linien entspricht. Die Linien sind mit den Bezugszeichen 21 bis 25 bezeichnet, wobei die jeweils dicht beieinander verlaufenden durchgezogenen und unterbrochenen Linien dieselbe Fingerabdruck-Erhebung zu verschiedenen Zeitpunkten darstellen und daher mit demselben Bezugszeichen bezeichnet sind. Man erkennt im oberen Figurenteil eine erste Bifurkation 28 und im unteren Figurenteil eine zweite Bifurkation 29. Es ist mit einer geraden, ununterbrochenen und mit einer geraden, unterbrochenen Linie jeweils der Abstand zwischen den Bifurkationen 28, 29 zu den beiden Zeitpunkten der ersten Bilder eingezeichnet. Außerdem ist jeweils der entlang der beiden geraden Linien gemessene Abstand der Hautlinien 21 bis 25 mit den Bezugszeichen I₁, I₂, I₃, I₄ (für den früheren Zeitpunkt) und mit den Bezugszeichen d₁, d₂, d₃, d₄ (für den späteren Zeitpunkt) bezeichnet.

Man erkennt, dass sich der Abstand der beiden Bifurkationen 28, 29 zwischen den beiden Zeitpunkten kaum verändert hat. Allerdings hat sich der Abstand zwischen den Linien 22 und 23, bezeichnet durch I₂, d₂ von dem früheren Zeitpunkt bis zu dem späteren Zeitpunkt deutlich verringert und hat sich der Abstand der Linien 23 und 24, bezeichnet durch I₃, d₃ deutlich vergrößert. Zur Detektion der zyklischen Größenveränderungen werden in dem Ausführungsbeispiel die so definierten Abstände I₁-I₄ bzw. d₁-d₄ jeweils für die ausgewerteten ersten Bilder bestimmt. Insbesondere werden regelmäßig, z.B. in Abständen von höchstens 0,08 Sekunden, vorzugsweise höchstens 0,05 Sekunden, jeweils erste Bilder ausgewertet und die Abstände jeweils von Paaren nicht benachbarter Linien bestimmt, und zwar vorzugsweise über zumindest zwei, besonders bevorzugt mindestens 3 Zyklen.

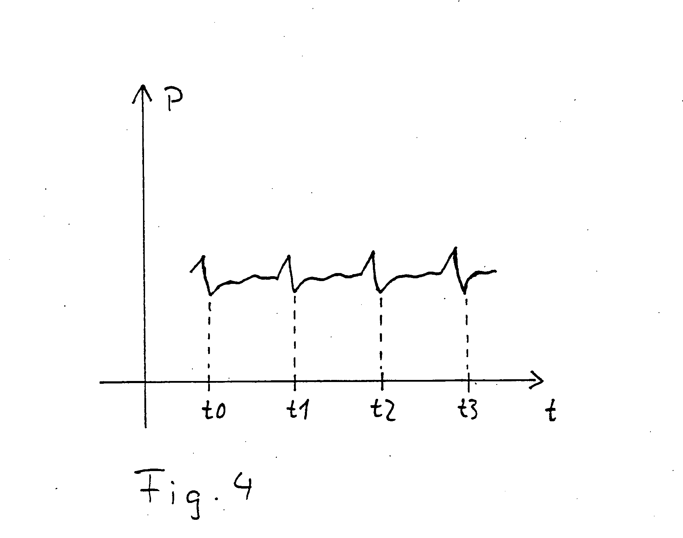

Die Dynamik der zyklischen Abstandsänderung (z.B. des Abstandes I₂ bzw. d₂) gleicht der Pulskurve, die in Fig. 4 dargestellt ist. Fig. 4 zeigt dabei den Druck P in einer Blutader als Funktion der Zeit. Man erkennt, dass der Druck wiederkehrend und in regelmäßigen Zeitabständen ein Maximum und ein Minimum erreicht. Die Minima werden in der Darstellung zu den Zeitpunkten t0, t1, t2, t3 erreicht. Dabei wird das zeitliche Maximum jeweils kurz vor dem zeitlichen Minimum erreicht. Über den größten Teil eines jeden der Zyklen ist das Druckniveau nahezu konstant. Die Abstände der Linien 21 bis 25 (Fig. 3) nehmen im Verlauf eines jeden Zyklus ebenfalls kurzzeitig ein Maximum und anschließend ein Minimum an. Dabei muss das Maximum der aus den ersten Bildern ermittelten Abstände der Linien 21 bis 25 nicht kurz vor dem Minimum erreicht werden, wie es bei der Pulskurve gemäß Fig. 4 der Fall ist, sondern kann umgekehrt auch das Minimum kurz vor dem Maximum erreicht werden. Der Grund hierfür liegt darin, dass aufgrund des Blickwinkels bei der Aufnahme der ersten Bilder eine perspektivische Verzerrung der tatsächlichen Abstände der Linien auftreten kann. Beispielsweise kann sich eine Linie im Verlauf des Pulszyklus so bewegen, dass sich in den entsprechenden ersten Bildern scheinbar eine Annäherung an eine benachbarte Linie ergibt, wohingegen tatsächlich eine Vergrößerung des Abstandes stattfindet. Ein weiterer Grund dafür, dass das Minimum des Abstandes kurz vor dem Erreichen des Maximums erreicht werden kann, besteht darin, dass der Finger 1 unter Umständen unter Druck auf der transparenten Unterlage 2 aufliegt und sich Linien am Rand der Öffnung 8 nicht oder nur geringfügig bewegen können.

Ob das Minimum kurz vor oder kurz nach dem Maximum erreicht wird, ist für die erfindungsgemäße Bestimmung jedoch ohne Bedeutung, sofern (wie bei der besonders bevorzugten Ausführungsform) die zeitliche Kurve der Abstandsänderung normiert wird, und zwar zeitlich hinsichtlich einer Norm-Zyklendauer und hinsichtlich der Amplitude, wobei eine Umkehr des Vorzeichens der Amplitude stattfinden kann und wobei ausgehend von einer mittleren Amplitude, die auf Null normiert wird, sowohl positive als auch negative Amplitudenwerte erreicht werden können. Durch die Normierung kann ein Vergleich der zeitlichen Dynamik mit einer in einem Datenspeicher der Auswertungseinrichtung 10 abgelegten Vergleichskurve stattfinden. Anstelle der Speicherung der vollständigen Vergleichskurve in den Datenspeichern können auch einzelne Vergleichswerte, z.B. zeitlicher relativer Abstand des Maximums und des Minimums innerhalb eines Zyklus, bezogen auf die Norm-Zyklendauer, abgespeichert sein. Zusätzlich wird optional ausgewertet, ob die absolute (nicht normierte) Frequenz und die größten Amplituden während der Zyklen plausible Werte erreichen. Die Frequenz entspricht dabei der Pulsfrequenz. Die Amplitude kann abhängig von der Größe der Öffnung 8 mit Erfahrungswerten verglichen werden.

Wenn ein Vergleich der aus den ersten Bildern bestimmten Amplitudenkurve und einer Vergleichskurve durchgeführt wird, kann nach der Normierung der gemessenen Kurve z.B. die Standardabweichung sämtlicher aus der Messung bestimmten Punkte der gemessenen Kurve mit der Normkurve ermittelt werden. Liegt die Standardabweichung unter einem vordefinierten Grenzwert, wird entschieden, dass es sich bei dem Finger um den Finger einer lebenden Person handelt. Liegt die Standardabweichung über dem vordefinierten Grenzwert, wird entschieden, dass es sich bei dem Finger nicht um den Finger einer lebenden Person handelt.

Zusätzlich zu der erfindungsgemäßen Pulszyklenerkennung kann wie in Fig. 1 dargestellt ein größerer Bereich des Fingerabdruck-Musters aufgenommen werden. Hierzu wird die Strahlung genutzt, die den halbdurchlässigen Spiegel 4 durchläuft, ohne reflektiert zu werden, und mit Hilfe einer Optik 5 und einer zweiten Aufnahmeeinrichtung 6 aufgenommen wird. Die Weiterverarbeitung und Auswertung des so erzeugten zumindest einen zweiten Bildes kann in der an sich bekannten Weise erfolgen.

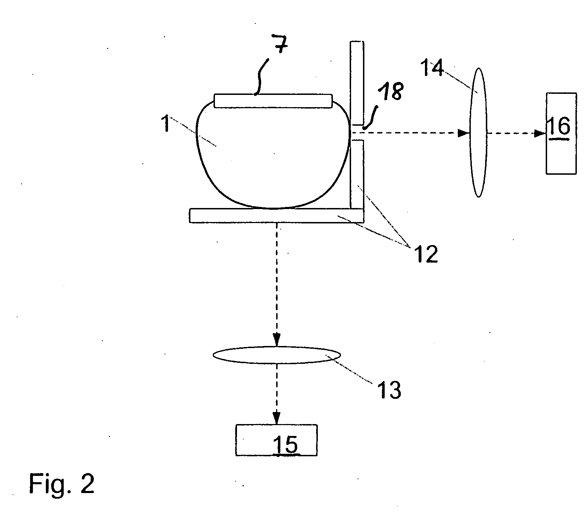

Fig. 2 zeigt eine zweite Ausgestaltung einer erfindungsgemäßen Anordnung. Dabei zeigt die Fig. 2 einen Querschnitt quer zur Längsachse des Fingers 1. Der Fingernagel 7 liegt wiederum oben in der Figur. Die Unterseite des Fingers 1 liegt auf einer für die verwendete Strahlung durchlässigen Auflagefläche 12. Die Auflagefläche 12 erstreckt sich jedoch auch seitlich (rechts) des Fingers 1 und weist wiederum eine Öffnung 18 auf. Die Betriebsweise der Vorrichtung ist jedoch weitgehend identisch mit der Betriebsweise der anhand von Fig. 1 beschriebenen Vorrichtung. Zur Aufnahme der ersten Bilder, die den an der Öffnung 18 liegenden Bereich des Fingers 1 abbilden, werden mit Hilfe einer ersten Optik 14 und einer Aufnahmeeinrichtung 16 aufgenommen. Es kann (nicht dargestellt) wiederum die Auswertungseinrichtung 10 vorgesehen sein, die in diesem Fall mit der Aufnahmeeinrichtung 16 verbunden ist.

Die Optik 14 und die Aufnahmeeinrichtung 16 können bei einer anderen Ausgestaltung durch den oben bezeichneten Laser-Abstandssensor ersetzt werden. In diesem Fall wird die Bewegung des Fingers gemäß dem Laser-Triangulationsprinzip ermittelt. Das Ergebnis der Bewegungsmessung (z. B. ein Zahlenwert des Abstandes zwischen dem Sensor und der Finger-Oberfläche als Funktion der Zeit) kann in gleicher Weise weiterverarbeitet werden wie auf andere Weise gewonnene Ergebnisse der zyklischen Bewegungsdetektion. Insbesondere kann ebenfalls ein Vergleich mit einer für Menschen typischen Pulskurve stattfinden.

Durch den unteren Teil der transparenten Auflage 12 hindurch wird der eigentliche Fingerabdruck erkannt, mit Hilfe einer Optik 13 und einer Aufnahmeeinrichtung 15.

Die anhand der Fig. 1 und 2 beschriebenen Anordnungen bzw. Vorrichtungen unterscheiden sich im Wesentlichen nur dadurch, dass der Bereich, der für die Zyklenerkennung genutzt wird, in der Ausgestaltung gemäß Fig. 1 ein Teilbereich oder ein überlappender Bereich des größeren Bereichs ist, der für die eigentliche Fingerabdruck-Erkennung verwendet wird. Dagegen ist der Bereich für die Zyklenerkennung gemäß Fig. 2 an anderer Stelle des Fingers 1 als der Bereich, der für die eigentliche Fingerabdruck-Erkennung verwendet wird.

Die Erfindung ist nicht auf die anhand von Fig. 1 und Fig. 2 beschriebene Art der Gewinnung von Bildern beschränkt. Vielmehr können sowohl für den Bereich, der für die Zyklenerkennung verwendet wird, als auch für den Bereich, der für die eigentliche Fingerabdruck-Erkennung verwendet wird, andere, an sich bekannte Verfahren der Bildgewinnung von Fingerabdruck-Mustem eingesetzt werden. Vorzugsweise ist jedoch der für die Zyklenerkennung genutzte Bereich des Fingers freiliegend, d.h. der Bereich liegt nicht an einer Oberfläche an, so dass die zyklische Bewegung nicht behindert ist.

## Patentansprüche

1. Verfahren zum Erfassen biometrischer Merkmale (21-25), wobei
- Bilder zumindest eines Teils eines Fingerabdruck-Muster eines Fingers (1) aufgenommen werden,
- eine zyklische Größenänderung zumindest eines Teils des Fingerabdruck-Musters durch Auswertung von Bildern zumindest des Teils des Fingerabdruck-Musters detektiert wird, wobei die Bilder zu verschiedenen Zeitpunkten aufgenommen wurden, und
- durch Auswertung der zyklischen Größenänderung ermittelt wird, ob der Finger (1) Teil einer lebenden Person ist.

2. Verfahren nach dem vorhergehenden Anspruch, wobei aus den Bildern eine Frequenz und/oder eine Amplitude (I, d) einer Bewegung zumindest eines Bildelements (21-25) des Fingerabdruck-Musters ermittelt wird oder wobei eine der Frequenz und/oder der Amplitude äquivalente Größe ermittelt wird.

3. Verfahren nach dem vorhergehenden Anspruch, wobei die Frequenz und/oder die Amplitude, oder die äquivalente Größe(n), mit abgespeicherten Informationen über eine für lebende Personen typische Bewegung und/oder über eine für lebende Personen typischen zeitlichen Blutdruckverlauf verglichen wird/werden und wobei auf Grund des Vergleichs entschieden wird, ob der Finger Teil einer lebenden Person ist.

4. Vorrichtung zum Erfassen biometrischer Merkmale, mit
- einer Muster-Aufnahmeeinrichtung (3, 9), die ausgestaltet ist, Bilder zumindest eines Teils eines Fingerabdruck-Musters eines Fingers aufzunehmen,
- eine Detektionseinrichtung (10), die ausgestaltet ist, eine zyklische Größenänderung zumindest eines Teils des Fingerabdruck-Musters durch Auswertung von Bildern zumindest des Teils des Fingerabdruck-Musters zu detektieren, wobei die Bilder zu verschiedenen Zeitpunkten aufgenommen wurden,
- einer Auswertungseinrichtung (10), die ausgestaltet ist, durch Auswertung der zyklischen Größenänderung zu ermitteln, ob der Finger (1) Teil einer lebenden Person ist.

5. Vorrichtung nach dem vorhergehenden Anspruch, wobei die Vorrichtung ferner einen Anlagekörper (2) mit einer Anlage-Oberfläche zum Anlegen des Fingers (1) aufweist, wobei der Anlagekörper (2) im Bereich der Anlage-Oberfläche eine Aussparung (8) aufweist, die eine Bewegung eines Teils des Fingers (1) im Bereich des Fingerabdruck-Musters ermöglicht, wenn der Finger (1) an der Anlage-Oberfläche anliegt, und wobei die Detektionseinrichtung (10) ausgestaltet ist, die zyklische Größenänderung des im Bereich der Aussparung (8) angeordneten Teils des Fingers (1) zu detektieren.

6. Vorrichtung nach dem vorhergehenden Anspruch, wobei die Aussparung (8) eine Breite von mindestens 2 mm, vorzugsweise mindestens 3 mm aufweist.

7. Vorrichtung nach einem der beiden vorhergehenden Ansprüche, wobei die Muster-Aufnahmeeinrichtung (3, 9) ausgestaltet ist, das Fingerabdruck-Muster aufzunehmen, wenn der Finger (1) an der Anlage-Oberfläche anliegt.

## Claims

1. Method for detecting biometric features (21-25), wherein
- images of at least part of a fingerprint pattern of a finger (1) are recorded,
- a cyclic change in size of at least part of the fingerprint pattern is detected by evaluating images of at least part of the fingerprint pattern, wherein the images were recorded at different times, and
- the cyclic change in size is evaluated in order to determine whether the finger (1) is part of a living person.

2. Method according to the preceding claim, wherein the images are used to determine a frequency and/or amplitude (1, d) of a movement of at least one image element (21-25) of the fingerprint pattern or wherein a quantity equivalent to the frequency and/or to the amplitude is determined.

3. Method according to the preceding claim, wherein the frequency and/or the amplitude, or the equivalent quantity(s), is/are compared to stored information on a movement which is typical for a living person and/or on a blood pressure profile over time which is typical for living human beings, and wherein a decision is reached on the basis of said comparison as to whether the finger is part of a living person.

4. Apparatus for detecting biometric features, comprising
- a pattern recording device (3, 9) adapted for recording images of at least part of a fingerprint pattern of a finger,
- a detection device (10) adapted for detecting a cyclic change in size of at least part of the fingerprint pattern by evaluating images of at least part of the fingerprint pattern, wherein the images were recorded at different times,
- an evaluation device (10) adapted to evaluate the cyclic change in size in order to determine whether the finger (1) is part of a living person.

5. Apparatus according to the preceding claim, wherein the apparatus further has a placement body (2) with a placement surface for placing the finger (1), wherein the placement body (2) has, in the region of the placement surface, a cutout (8) which permits movement of part of the finger (1) in the region of the fingerprint pattern when the finger (1) is placed on the placement surface, and wherein the detection device (10) is adapted for detecting the cyclic change in size of that part of the finger (1) which is situated in the region of the cutout (8).

6. Apparatus according to the preceding claim, wherein the cutout (8) has a width of at least 2 mm, preferably at least 3 mm.

7. Apparatus according to one of the two preceding claims, wherein the pattern recording device (3, 9) is adapted for recording the fingerprint pattern if the finger (1) is placed on the placement surface.

## Revendications

1. Procédé pour détecter des caractéristiques biométriques (21-25), sachant
- que des images d'au moins une partie d'un spécimen d'empreinte digitale d'un doigt (1) sont enregistrées,
- qu'un changement cyclique dimensionnel d'au moins une partie du spécimen d'empreinte digitale est détecté par analyse des images d'au moins la partie du spécimen d'empreinte digitale, les images étant enregistrées à différents moments, et
- qu'on détermine par analyse du changement cyclique dimensionnel si le doigt (1) appartient à une personne vivante.

2. Procédé selon la revendication précédente, sachant qu'une fréquence et/ou une amplitude (I, d) d'un mouvement d'au moins un élément d'image (21-25) du spécimen d'empreinte digitale est déterminée à partir des images ou qu'une dimension équivalente à la fréquence et/ ou à l'amplitude est déterminée.

3. Procédé selon la revendication précédente, sachant que la fréquence et/ou l'amplitude, ou la(les) dimension(s) équivalente(s) est/sont comparée(s) aux informations enregistrées sur un mouvement caractéristique de personnes vivantes et/ou sur une variation temporelle de pression sanguine caractéristique de personnes vivantes, et sachant qu'on décide sur la base de la comparaison si le doigt appartient à une personne vivante.

4. Dispositif de détection de caractéristiques biométriques, comprenant
- une installation d'enregistrement de spécimen (3, 9) qui est réalisée pour enregistrer des images d'au moins une partie d'un spécimen d'empreinte digitale d'un doigt,
- une installation de détection (10) qui est réalisée pour détecter un changement cyclique dimensionnel d'au moins une partie du spécimen d'empreinte digitale par analyse des images d'au moins la partie du spécimen d'empreinte digitale, les images étant enregistrées à différents moments,
- une installation d'analyse (10) qui est conçue pour déterminer par analyse du changement cyclique dimensionnel si le doigt (1) appartient à une personne vivante.

5. Dispositif selon la revendication précédente, sachant que le dispositif comprend de plus un corps d'appui (2) avec une surface d'appui pour poser le doigt (1), que le corps d'appui (2) présentant dans la zone de la surface d'appui un creux (8) qui permet un mouvement d'une partie du doigt (1) dans la zone du spécimen d'empreinte digitale, lorsque le doigt (1) repose contre la surface d'appui, et dans lequel l'installation de détection (10) est conçue pour détecter le changement cyclique dimensionnel de la partie du doigt (1) disposée dans la zone du creux (8).

6. Dispositif selon la revendication précédente, sachant que le creux (8) présente une largeur d'au moins 2 mm, de préférence d'au moins 3 mm.

7. Dispositif selon l'une quelconque des deux revendications précédentes, sachant que l'installation d'enregistrement de spécimen (3, 9) est réalisée pour enregistrer le spécimen d'empreinte digitale lorsque le doigt (1) repose contre la surface d'appui.
